# EUROPEAN PATENT APPLICATION

(11) **EP 1 367 795 A1**
(43) Date of publication of application: **03.12.2003**
(21) Application number: 02701717.7
(22) Date of filing: 05.03.2002
(51) Int. Cl.: H04L 27/36

(54) **SIGNAL PROCESSING APPARATUS AND SIGNAL PROCESSING METHOD**

(30) Priority: 06.03.2001 JP 2001061317
(71) Applicant: MATSUSHITA ELECTRIC INDUSTRIAL CO., LTD., Kadoma-shi, Osaka 571-8501 (JP)
(72) Inventor: MATSUOKA, Akihiko, Yokohama-shi, Kanagawa 226-0021 (JP); MURAKAMI, Yutaka, Kawasaki-Shi Kanagawa 213-0034 (JP)
(74) Representative: Grünecker, Kinkeldey, Stockmair & Schwanhäusser Anwaltssozietät
(86) International application number: JP0201993
(87) International publication number: WO02071715

(57) **Abstract**

Digital modulator 101 digitally modulates a transmission data. Modulation signal decision section 102 decides whether a peak power is occurred from transition of signal point of this modulation signal. Control signal generator 103 outputs a phase-shifted phase control signal when it is decided based on the decision result that peak power was occurred and outputs a non-phase-shifted phase control signal when it is decided based on the decision result that peak power was not occurred. Phase controller 104 changes the phase of a modulation signal using the control signal outputted from control signal generator 103. Filter 105 limits the bandwidth of the modulation signal outputted from phase controller 104. Orthogonal modulator 106 modulates the modulation signal outputted from filter 105.

## Description

### Technical Field

The present invention relates to a signal processing apparatus and a signal processing method, specifically, relates to a signal processing apparatus and a signal processing method used in signal modulation of a radio communication apparatus.

### Background Art

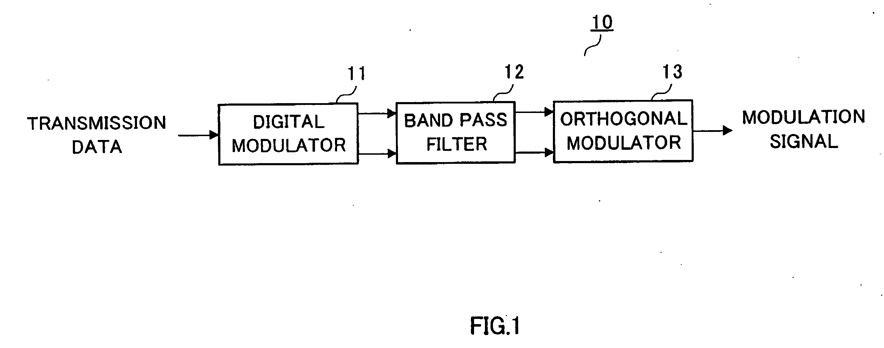

The conventional modulation section of a radio communication system which uses digital orthogonal modulation method utilizes configuration that carries out a bandwidth limitation using band pass filter after performing digital modulation is used broadly. FIG. 1 is a block diagram showing a configuration of a conventional signal processing apparatus. In FIG. 1, a signal processing apparatus 10 consists of digital modulator 11, band pass filter 12 and orthogonal modulator 13.

Digital modulator 11 digitally modulates a transmission data and outputs the obtained orthogonal modulated signal to band pass filter 12. Band pass filter 12 limits the bandwidth of the orthogonal modulated signal and outputs the obtained orthogonal baseband signal to orthogonal modulator 13. Orthogonal modulator 13 performs orthogonal modulation processing on the bandwidth-limited orthogonal baseband signal and outputs the obtained transmission modulation signal.

However, the bandwidth-limited modulation signal in the conventional apparatus which is next to the signal (signal point) is overlapped at the transmission time and peak power occurs. In particular, in the case when a signal is modulated by an M-ary orthogonal modulation method, a large signal amplitude value occurs by overlapping of large signal amplitude value. As a result, there is a problem that the dynamic range of a modulation signal after limiting the bandwidth is enlarged. In addition, a linearity that covers the dynamic range is necessary in the apparatus which processes the modulation signal.

### Disclosure of Invention

It is an object of the present invention to provide a signal processing apparatus and a signal processing method to suppress the dynamic range of a modulation signal after limiting the bandwidth.

Such an object can be achieved by deciding on the occurrence of peak power from the transition of signal point of the signal modulated with a digital modulation method, changing the phase difference of signal point before transition and signal point after transition of modulation signal when it is decided that peak power was occurred, preventing the overlapping of large signal amplitude, and preventing the occurrence of large signal peak power.

### Brief Description of Drawings

FIG. 1 is a block diagram showing a configuration of a conventional signal processing apparatus;
FIG. 2 is a block diagram showing a configuration of a signal processing apparatus according to Embodiment 1 of the present invention;
FIG. 3 is a flowchart illustrating an operational example of a signal processing apparatus according to Embodiment 1 of the present invention;
FIG. 4 is a diagram illustrating an example of a signal point constellation of 16 QAM method; and
FIG. 5 is a block diagram showing a configuration of a communication apparatus according to Embodiment 2 of the present invention.

### Best Mode for Carrying out the Invention

Hereinafter, embodiments of the present invention will be specifically described with reference to the accompanying drawings.

### (Embodiment 1)

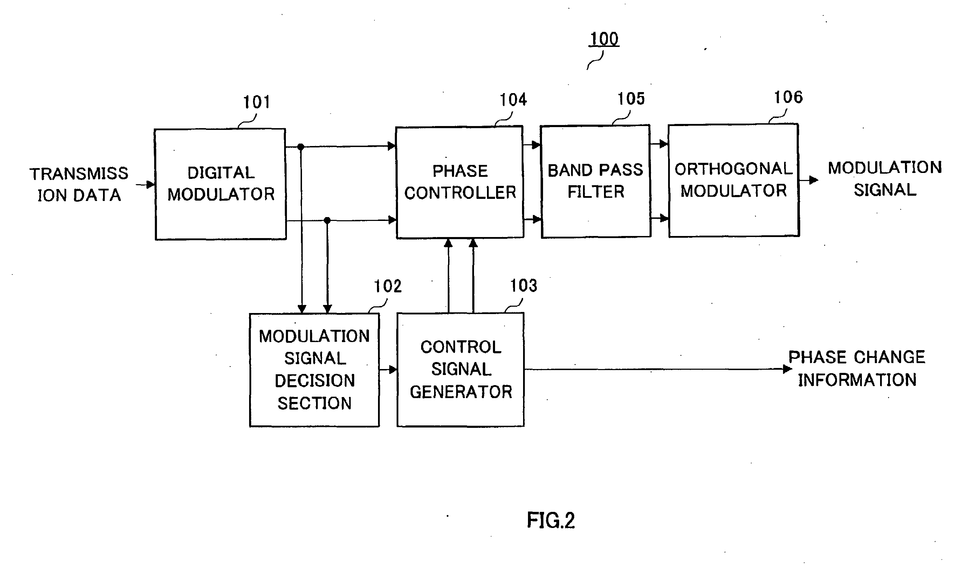

FIG. 2 is a block diagram showing a configuration of a signal processing apparatus according to Embodiment 1 of the present invention. Signal processing apparatus 100 of FIG. 2 is mainly composed of digital modulator 101, modulation signal decision section 102, control signal generator 103, phase controller 104, filter 105 and orthogonal modulator 106.

In FIG. 2, digital modulator 101 digitally modulates a transmission data and outputs the obtained modulated signal to modulation signal decision section 102 and phase controller 104. For example, digital modulator 101 performs mapping of the transmission signal based on signal point constellation based on the used modulation method such as 16QAM orthogonal amplitude modulation (Quadrature Amplitude Modulation), etc., and a modulation signal is obtained.

Modulation signal decision section 102 decides whether peak power of a modulation signal modulated in digital modulator 101 is occurred from the transition of a signal point of such a modulation signal. For example, modulation signal decision section 102 measures the transition of a signal point which continues for along an appointed 2 consecutive time units, and decides that the peak power is occurred when the signal point before transition and signal point after transition of the same phase and both signal points are of a maximum amplitude value.

In addition, modulation signal decision section 102 outputs a decision result to control signal generator 103. For example, when it is decided that peak power was occurred, modulation signal decision section 102 outputs the decision result "1", whereas when it is decided that peak power was not occurred, modulation signal decision section 102 outputs the decision result "0".

Control signal generator 103 outputs a control signal with phase shift to phase controller 104 and other external sections when it is decided that peak power was occurred according to the decision result of modulation signal decision section 102. On the other hand, control signal generator 103 outputs a phase control signal without phase shift to phase controller 104 when it is decided that peak power was not occurred according to decision result of modulation signal decision section 102. Such a phase control signal is a unit vector, i.e., the amplitude value "1" (without unit) and only the phase of modulation signal is changed while amplitude value is not changed.

Phase controller 104 changes the phase of a modulation signal using the control signal outputted from control signal generator 103. For example, phase controller 104 complex-multiplies the control signal outputted from control signal generator 103 by the modulation signal, and outputs the obtained modulation signal to filter 105. Signal point of which the phase is changed, either signal point before transition or signal point after transition is preferable among signal points of modulation signal.

For example, phase controller 104 changes the phase of signal point after transition by 90 degrees, and changes the phase difference of signal point before transition and signal point after transition.

As a result, the phase difference of a signal point before transition and signal point after transition of a modulation signal is changed when it is decided that peak power was occurred. In addition, the phase difference of a signal point before transition and signal point after transition of a modulation signal is not changed when it is decided that peak power was not occurred.

Filter 105 limits the bandwidth of modulation signal outputted from phase controller 104. Then, filter 105 outputs the bandwidth limited modulation signal to orthogonal modulator 106 as an orthogonal baseband signal. Orthogonal modulator 106 outputs the orthogonal baseband signal after performing modulation.

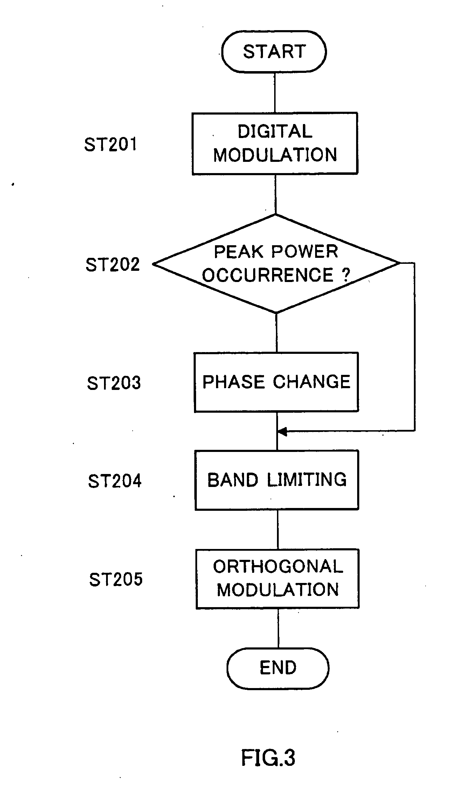

Operation of signal processing apparatus according to the present embodiment will be explained below. FIG. 3 is a flowchart illustrating an operational example of a signal processing apparatus according to the present embodiment.

In step (hereinafter, it is abbreviated as "ST") 201, transmission data is digitally modulated in digital modulator 101. In ST202, it is decided in modulation signal decision section 102 whether peak power in the modulation signal is occurred. When peak power in the modulation signal is occurred, continue to ST203, whereas when peak power in the modulation signal is not occurred, then jump to ST204.

In ST203, the modulation signal is changed by a predetermined phase portion in phase controller 104. In ST204, the bandwidth of modulation signal is limited in filter 105. In ST205, modulation signal is subjected to orthogonal modulation in orthogonal modulator 106.

According to signal processing apparatus of the present invention as described above, it is possible to determine the occurrence of peak power from the signal point transition of a signal modulated with a digital modulation method, change the phase of either signal points before transition or after transition of modulation signal after being decided that peak power is occurred in case when the signal point transition is a predetermined transition, prevent the overlapping of the next large signal amplitude, prevent the occurrence of a large signal peak power and hence suppress the dynamic range of modulation signal being bandwidth limited.

Moreover, in the above description, when the signal point before transition and signal point after transition are of the same phase and both signal points are of maximum amplitude values, in particular, the condition that the peak power is occurred is not limited even it is decided that peak power is occurred.

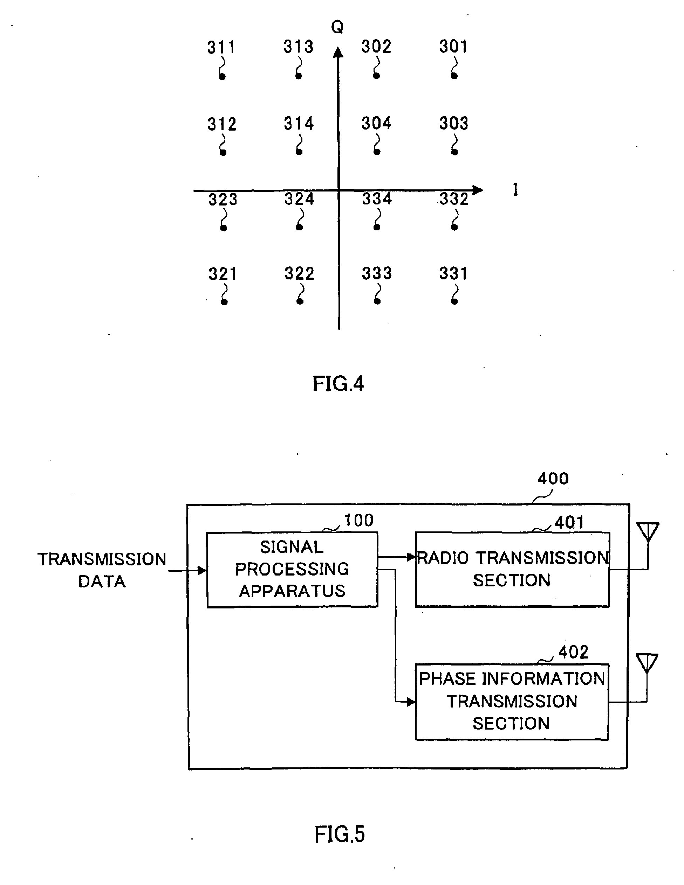

An example of deciding that peak power is occurred will be explained below. FIG. 3 [4] is a diagram illustrating an example of a signal point constellation of 16 QAM method. In FIG. 4, signal points 301-334 show signal points modulated by 16QAM.

For instance, modulation signal decision section 102 decides that peak power is occurred because signal points before/after transition are of same phase and both signal points are of maximum amplitude value in the case when signal point 301 is of fixed position (no transition) . Similarly, modulation signal decision section 102 decides that peak power is occurred because signal points before/after transition are of same phase and both signal points are of maximum amplitude values when signal point 311 is of fixed position, signal point 321 is of fixed position or signal point 331 is of fixed position.

As a further example, modulation signal decision section 102 decides that peak power is occurred as signal point before/after transition of the same phase or of 180-degree phase difference and both signal points of maximum amplitude value in the case when signal point 301 or signal point 321 transits from signal point 301. Similarly, modulation signal decision section 102 decides that peak power is occurred as signal point before/after transition are of the same phase or of 180 degree phase difference and both signal points are of maximum amplitude value in the case when signal point 311 or signal point 331 transits from signal point 311, in the case when signal point 321 or signal point 301 transits from signal point 321 or in the case when signal point 331 or signal point 311 transits from signal point 331.

In addition, as another example, modulation signal decision section 102 decides that peak power is occurred in the case when each of signal points 301, 302, 303 transits from signal points 301, 302 or 303, respectively, in the case when each signal point before/after transition is signal point of maximum amplitude value, respectively, or in the case when each of signal point of distance between signal points is the nearest to signal point of said maximum amplitude.

Similarly, modulation signal deciding section 102 decides that peak power is occurred as each of signal points before/after transition is of maximum amplitude value or each of signal point of distance between signal points is the nearest to signal point of said maximum amplitude in the case when either of signal points 311, 312 or 313 transits from either of signal points 311, 312 or 313, in the case when either of signal points 321, 322 or 323 transits from either of signal points 321, 322 or 323, or in the case when either of signal points 331, 332 or 333 transits from either of signal points 331, 332 or 333.

As a further example, modulation signal deciding section 102 decides that peak power is occurred as either of signal points before/after transition is a signal point of large amplitude or each of signal point of distance between signal points is the nearest to signal of said maximum amplitude and either of signal points before/after transition is a signal point of maximum amplitude in the case when either of signal points 301, 302 or 303 transits from signal 301, or in the case when signal point 301 transits from signal points 301, 302 or 303.

Similarly, modulation signal deciding section 102 decides that peak power is occurred as each of signal points before/after transition is of maximum amplitude value or each of signal point of distance between signal points is the nearest to signal point of said maximum amplitude in the case when either of signal points 311, 312 or 313 transits from signal point 311, in the case when signal point 311 transits from either of signal points 311, 312 or 313, in the case when either of signal points 321, 322 or 323 transits from signal point 321, in the case when signal point 321 transits from signal points 321, 322, 323, in the case when either of signal points 331, 332 or 333 from signal point 331, or in the case when signal point 331 transits from signal points 331, 332, 333.

As another example, modulation signal deciding section 102 decides that peak power is occurred as each of signal points before/after transition is a signal point of maximum amplitude or signal point of the maximum amplitude and signal point of maximum amplitude of different 180 degree phase in addition to each of signal point of distance between signal points is the nearest to signal point of said maximum amplitude in the case when either of signal points 301, 302, 303, 321, 322 or 323 transits from either of signal points 301, 302, 303, 321, 322 or 323.

Similarly, modulation signal deciding section 102 decides that peak power is occurred as each of signal points before/after transition is a signal point of maximum amplitude or signal point of last maximum amplitude and signal point of maximum amplitude of different 180 degree phase in addition to each of signal point of distance between signal points is the nearest to signal point of said maximum amplitude in the case when either of signal points 311, 312, 313, 331, 332 or 333 transits from either of signal points 311, 312, 313, 331, 332 or 333.

As further example, modulation signal deciding section 102 decides that peak power is occurred because each of the before/after transition signal points is a signal point of maximum amplitude or signal point of the maximum amplitude and signal point of maximum amplitude of different 180 degree phase in addition to each signal point of distance between signal points is the nearest to signal point of said maximum amplitude while either of signal points before/after transition is a signal point of maximum amplitude in the case when either of signal points 301, 302, 303, 321, 322 or 323 transits from signal point 301 or 321, or in the case when signal point 301 or 321 transits from either of signal points 301, 302, 303, 321, 322 or 323.

Similarly, modulation signal deciding section 102 decides that peak power is occurred because each of before/after transition signal points is a signal point of maximum amplitude or signal point of the maximum amplitude and signal point of maximum amplitude of different 180 degree phase in addition to each signal point of distance between signal points is the nearest to signal point of said maximum amplitude while either of signal points before/after transition is a signal point of maximum amplitude in the case when either of signal points 311, 312, 313, 331, 332 or 333 transits from signal point 311 or 331, or in the case when signal point 311 or 331 transits from either of signal points 311, 312, 313, 331, 332 or 333.

In addition, a digital modulation method of a signal of which signal processing apparatus of the present embodiment employs is not particularly limited, but any other modulation method of which peak power is occurred is also possible, for example, 16QAM, 64QAM, etc., of orthogonal amplitude modulation method can be applied.

When a large signal point of the amplitude of a digital orthogonal amplitude modulation method continues, the occurrence of a large signal of a peak power is prevented and the dynamic range of modulation signal after limiting the bandwidth can be suppressed.

Moreover, although an example is explained in the aforementioned explanation in which modulation signal deciding section 102 outputs a decision result "1" when it is decided that a peak power was occurred, whereas when it is decided that a peak power was not occurred modulation signal decision section 102 outputs decision result "0", but if decision results can be distinguished by any signal that can identify two states well, then what kind of value can be applied.

Furthermore, although the operation in the aforementioned explanation is to change only the phase rather than changing the amplitude value of a modulation signal when the amplitude value of a phase control signal is made "1", but it is not limited to this, and any amplitude value of the phase control signal larger than or equal 1 might be used to change the phase of modulation signal as long as the amplitude value of the modulation signal can be amplified or attenuated.

Still further, although a 90-degree phase shift of a modulation signal is given in the aforementioned explanation, but the phase shift amount is not limited to this. For instance, a 135-degree phase shift of a modulation signal might be used. Since, the signal point after changing the phase by shifting the phase by 135-degree, etc., is not overlapped other signals point in the case when using a 16QAM, etc., M-ary orthogonal amplitude modulation, it is then possible to distinguish between the changed signal point and the unchanged signal point and the phase can be transmitted.

In addition, it is preferable that the change amount of phase is the change amount which can reduce the peak power even when both need not to be fixed.

Moreover, in the present Embodiment, although it is assumed that the phase difference of a signal point before transition and a signal point after transition of modulated signal does not change when it is decided that a peak power does not occur, but the changing method of phase is not limited to this. For example, when it is decided that peak power was not occurred, it is preferable that the phase of signal point before transition and signal point after transition of a modulation signal is appointed as phase.

### (Embodiment 2)

FIG. 5 is a block diagram showing a configuration of a communication apparatus according to Embodiment 2 of the present invention. Communication apparatus 400 of FIG. 5 is mainly composed of signal processing apparatus 100 of Embodiment 1, radio transmission section 401 and phase information transmission section 402.

Signal processing apparatus 100 digitally modulates transmission data, decides on the occurrence of peak power from signal point transition of a signal point modulated using digital modulation method, and the phase difference of signal point before transition and signal point after transition is changed when it is determined that a peak power was occurred. In addition, signal processing apparatus 100 transmits the modulated signal to radio transmission section 401 and outputs information of a phase change of a modulation signal to phase information transmission section 402.

Radio transmission section 401 transmits the modulation signal outputted from signal processing apparatus 100 and being converted into radio frequency. Phase information transmission section 402 transmits information of the phase change of the modulation signal outputted from signal processing apparatus 100 after being encoded, modulated and converted into radio frequency.

According to communication apparatus of the present embodiment, decides on the occurrence of peak power from the signal point transition of a signal modulated with a digital modulation method, changes the phase signal point of either signal point before transition or signal point after transition of modulation signal after deciding on the occurrence of peak power in the case when signal point transition is an assigned transition, thus, prevents overlapping of large signal amplitude, hence it is possible to prevent the occurrence of a large signal peak power and to suppress dynamic range of modulation signal after limiting the bandwidth. As a result, the communication apparatus can suppress the dynamic range of a transmission signal.

According to a communication apparatus of the present embodiment, further, decision operation of the phase change in the reception side can be omitted by transmitting information of a change amount of the phase difference of the signal modulated in signal processing apparatus.

In addition, the present invention is not limited to the aforementioned embodiments, and various changes can be made without varying from the scope of the invention. For example, although the execution of signal processing apparatus and communication apparatus is explained in the aforementioned embodiments, but it is not limited to this and such signal processing method can be executed as a software.

For example, a program to execute the aforementioned signal processing method will be stored in a ROM (Read Only Memory) beforehand, and such a program may be processed by CPU (Central Processor Unit).

Moreover, a program to execute the aforementioned signal processing method is stored in a storage medium which is readable by a computer, the stored program in the storage medium is recorded in a computer RAM (Random Access memory) and a computer may execute the processing based on the program.

As is clear from the above explanation and according to signal processing apparatus and signal processing method, deciding on the occurrence of peak power from the signal point transition of a signal modulation with digital modulation method, changing the phase signal point of either a signal point before transition or signal point after transition of modulation signal after deciding on the occurrence of peak power in the case when signal point transition is an assigned transition, thus, prevents overlapping of following large signal amplitude, hence it is possible to prevent the occurrence of a large signal peak power and also to suppress dynamic range of modulation signal after limiting the bandwidth.

The present application is based on the Japanese Patent Application No. 2001-061317 filed on March 6, 2001, entire content of which is expressly incorporated by reference herein.

### Industrial Applicability

The present invention is applicable to communication apparatus processing a modulation signal and radio communication apparatus.

## Claims

1. A signal processing apparatus comprising:
decision section which decides on the generation of peak power from a transition of signal point of a signal modulated by digital modulation method; and
phase control section which controls the phase of said signal being bandwidth limited based on said decision result.

2. The signal processing apparatus according to claim 1, wherein said phase control section changes the phase difference of signal point before transition and signal point after transition.

3. The signal processing apparatus according to claim 1, wherein said phase control section changes the phase difference of the signal point before transition and signal point after transition of a modulation signal when peak power is occurred, and in other decision results cases than the case of peak power occurrence, the phase of the modulation signal becomes a predetermined phase.

4. The signal processing apparatus according to claim 1, wherein said phase control section changes the phase difference of the signal point before transition and signal point after transition of a modulation signal when peak power is occurred, and in other decision results cases than the case of peak power occurrence, the phase of modulation signal does not change.

5. The signal processing apparatus according to claim 1, wherein said decision section decides on peak power occurrence when the signal points before/after transition of the same phase and both of signal points are of maximum amplitude values.

6. The signal processing apparatus according to claim 1, wherein said decision section decides on peak power occurrence when the signal points before/after transition of the same phase or of 180-degree phase difference and both of signal points are of maximum amplitude values.

7. The signal processing apparatus according to claim 1, wherein said decision section decides a peak power is occurred when each signal point before/after transition is a signal point of maximum amplitude or distance between signal points is either of a nearest signal point to signal points of said maximum amplitude signal point.

8. The signal processing apparatus according to claim 1, wherein said decision section decides that peak power is generated in the case when each signal point before/after transition is a signal of maximum amplitude or said signal of maximum amplitude and signal point of maximum amplitude and of 180-degree phase difference, and said either nearest signal point of distance between signal points and said either signal point.

9. The signal processing apparatus according to claim 7, wherein said decision section decides that peakpower is occurred when signal points before/after transition are signals of maximum amplitudes.

10. The signal processing apparatus according to claim 1, wherein said phase control section changes the phase of the modulation signal by a predetermined rotation angle.

11. The signal processing apparatus according to claim 1, wherein said decision section decides the transition of signal modulated with digital orthogonal modulation method, and said phase control section controls the phase of said signal.

12. The signal processing apparatus according to claim 1, wherein said phase control section multiplies a unit vector by the modulation signal.

13. A communication apparatus comprising signal processing apparatus and transmission section which transmits a modulation signal processed in said signal processing apparatus, wherein said signal processing apparatus comprising:
decision section which decides on the generation of peak power from a transition of signal point of a signal modulated by digital modulation method; and
phase control section which controls the phase of said signal being bandwidth limited based on said decision result.

14. The communication apparatus according to claim 13 comprising a phase information transmission section to transmits an information of changing amount of the phase difference of a modulation signal in said signal processing apparatus.

15. A signal processing method in which the phase of signal point before transition or a signal point after transition of a modulation signal being bandwidth limited is changed in the case when it is decided that peak power was generated from signal point transition of a signal point modulated using a digital modulation method.
